(19) **Europäisches Patentamt**
**European Patent Office**
**Office européen des brevets**

(11) **EP 1 735 607 B1**

(12) **EUROPÄISCHE PATENTSCHRIFT**

(45) Veröffentlichungstag und Bekanntmachung des Hinweises auf die Patenterteilung:
**03.06.2009 Patentblatt 2009/23**

(51) Int Cl.:
*G01N 21/47* (2006.01)   *G01N 21/45* (2006.01)
*G01B 11/24* (2006.01)   *G01B 11/30* (2006.01)
*G01B 9/02* (2006.01)

(21) Anmeldenummer: **05716826.2**

(22) Anmeldetag: **28.02.2005**

(86) Internationale Anmeldenummer:
**PCT/EP2005/050838**

(87) Internationale Veröffentlichungsnummer:
**WO 2005/098398 (20.10.2005 Gazette 2005/42)**

(54) **INTERFEROMETRISCHES SYSTEM FÜR DEN EINSATZ VON SONDEROPTIKEN**

INTERFEROMETRIC SYSTEM FOR USE OF SPECIAL LENSES

SYSTEME INTERFEROMETRIQUE POUR L'UTILISATION D'OPTIQUES SPECIALES

(84) Benannte Vertragsstaaten:
**CH DE FR GB IT LI**

(30) Priorität: **05.04.2004 DE 102004017229**

(43) Veröffentlichungstag der Anmeldung:
**27.12.2006 Patentblatt 2006/52**

(73) Patentinhaber: **ROBERT BOSCH GMBH**
**70442 Stuttgart (DE)**

(72) Erfinder: **KALLMANN, Ulrich**
**72070 Tübingen (DE)**

(56) Entgegenhaltungen:
**WO-A-92/19930**          **DE-A1- 4 309 056**
**US-A- 5 975 697**        **US-A1- 2003 011 784**
**US-B1- 6 191 862**

**Beschreibung**

Stand der Technik

Die Erfindung betrifft ein interferometrisches System mit einem, eine Lichtquelle und eine Beleuchtungsoptik aufweisenden Beleuchtungsarm zum Bilden eines Beleuchtungsstrahlengangs, einem eine Sonderoptik zur Vermessung eines Objektes aufweisenden Objektarm zum Bilden eines Abbildungsstrahlengangs, einem ein Verstellelement und ein daran angekoppeltes Referenzelement aufweisenden Referenzarm, mit einem einen Detektor aufweisenden Detektorarm und einem Strahlteiler, wobei im Referenzarm ein dispersionskompensierendes Medium zur Kompensation der Dispersion der optischen Komponenten des Objektarms eingebracht ist, das zumindest teilweise transparent ist.

Die Fertigung von Präzisionsteilen erfordert zur Sicherung der Qualität der entsprechenden Teile Meßmethoden zur Erfassung der Geometrie und der Beschaffenheit der Teile. Optische Meßmethoden, wie beispielsweise die Bilderfassung und Bildauswertung, die Interferometrie oder die Weißlichtinterferometrie leisten hier einen wichtigen Beitrag.

Das Prinzip des Weißlichtinterferometers beruht darauf, dass eine kurzkohärente Lichtquelle für die Beleuchtung eines abbildenden Systems benutzt wird. Das abbildende System besitzt zusätzlich zur normalen Abbildungsoptik einen Referenzarm, welcher von einem Teil des eingestrahlten Lichts durchlaufen wird. Besitzen nun der Laufweg des Lichtes $\Lambda_o$ im Objektarm und der Laufweg im Referenzarm $\Lambda_R$ einen Wegunterschied, der geringer ist als die Kohärenzlänge $l_C$ des Lichts, d.h.

$$|\Lambda_R - \Lambda_o| < l_C \tag{1}$$

so können die wieder zusammengeführten Lichtfelder eine messbare Interferenz aufweisen. Dies wird ausgenutzt, indem während der Messung der Wegunterschied der Lichtfelder definiert verändert wird und gleichzeitig die Intensität der wieder zusammengeführten Lichtfelder auf einem flächenhaft messenden Detektor, üblicherweise einer CCD-Kamera, gemessen wird. Die pixelweise Auswertung der durch die Interferenz erzeugten Intensitätsmodulation, das Intensitätskorrelogramm, liefert eine eindeutige Höheninformation für jedes einzelne Pixel. Dies führt, für das gesamte Pixelfeld ausgeführt, zu einer vollständigen Höheninformation des Objektes.

Kommerzielle Weißlichtinterferometer weisen typisch folgende Spezifikationen auf:

Die Höhenauflösung $\Delta z$ ist durch die verwendete mittlere Wellenlänge des Lichtes $\lambda_m$, die Kohärenzlänge $l_C$ und die Art des Korrelogrammauswertungsalgorithmus gegeben. Typische Parameter wie $\lambda_m = 600$ nm, $l_C = 2~\mu$m ermöglichen Werte von $\Delta z = 1$ nm.

Die laterale Auflösung $\delta$ gleicht der eines konventionellen abbildenden Systems und ist prinzipiell beschränkt durch $\lambda_m$ und die Numerische Apertur NA der Abbildungsoptik.

$$\delta \geq 0,61~\lambda_m / NA \tag{2}$$

Der maximale messbare Gesamthöhenunterschied $z_{max}$ bestimmt sich aus der technischen Machbarkeit, einen Wegunterschied in Referenzarm und Objektarm zu erzeugen, der über die gesamte Strecke präzise geführt wird. Geregelte Piezosysteme ermöglichen heute Werte von $z_{max} \leq 400~\mu$m

Konventionelle Interferometer, insbesondere Weißlichtinterferometer-Systeme können dann für die oben beschriebenen Aufgaben benutzt werden, wenn die zu vermessende Stelle leicht zugänglich ist und eine vorwiegend ebene Geometrie aufweist. Ist dies nicht der Fall, kommen Interferometer zum Einsatz, die eine auf das zu vermessende Objekt angepasste Sonderoptik haben.

So sind beispielsweise Interferometer mit Endoskop-Optiken bekannt (Lindner MW 2002 "White-light interferometry via an endoscope" Proc SPIE 4777: 90-101), die es erlauben, schwer zugängliche Stellen messtechnisch zu erfassen. Das optische Endoskop zeichnet sich dadurch aus, dass die abbildenden Linsen so dicht vor das Objekt gebracht werden könne, dass die Numerische Apertur NA in Gleichung (2) Werte annimmt, die eine ausreichende Auflösung $\delta$ ermöglichen.

In der DE 101 15 524 A1 ist ein Weißlichtinterferometer beschrieben, wobei im Messlichtweg eine optische Anordnung zum Erzeugen eines ebenen Zwischenbildes angeordnet ist. Ziel ist hier jedoch, einen Tiefenscan zu ermöglichen.

In der DE 100 47 495 A1 ist ein Weißlichtinterferometer mit einem Zwischenbild beschrieben, das ein Endoskop zur Messung in tiefen engen Bohrungen einsetzt und eine Tiefenauflösung von einigen Nanometern besitzt.

Aus der DE 101 62 180 A1 ist eine Messanordnung bekannt, die im Referenzarm ein elektrisch steuerbares Filter zur Anpassung der Intensitäten von Referenz- und Mess-Strahl enthält.

In der Schrift US 2003/0011784 A1 wird die Messung von komplexen Oberflächenformcn mittels einer sphärischen Wellenfront beschrieben, wobei hierfür eine interferometrische Anordnung vorgesehen ist. Gemäß der Schrift kann die Anordnung im Referenzarm optische Komponenten zur Kompensation der Dispersion der Optik im Objektarm aufweisen. Auch ist es bekannt, ein Zwischenbild durch die Optik im Objektarm zu erzeugen.

Schließlich wird in US 6,191,862 B1 ein Abbildungssystem erläutert, das ein Interferometer mit einem Objekt- und Referenzarm umfasst. Dabei können im Referenzarm ein Prismenpaar oder andere geeignete Bauelemente vorgesehen werden, um die Dispersion im Objekt- und Referenzarm auszugleichen.

Ein wichtiger Vertreter von auf das Bauteil abgestimmten Sonderoptiken für Weißlichtinterferometer sind so genannte Rundsichtoptiken. Diese ermöglichen Abbildungen von Objekten, die sich unter einem großen Winkel relativ zur optischen Achse befinden.

Nachteilig wirkt sich hier aber aus, dass durch die Sonderoptik die Architektur des interferometrischen Systems so weit festgelegt ist, dass das System nicht für eine andere Messaufgabe mit einer anderen Sonderoptik eingesetzt werden kann.

Es ist Aufgabe der Erfindung, ein interferometrisches System zur Verfügung zu stellen, bei dem das System flexibel ausgelegt ist und mit geringem Aufwand an die Messaufgabe angepasst werden kann.

Vorteile der Erfindung

Die Aufgabe der Erfindung wird dadurch gelöst, dass im Objektarm eine Linsenanordnung mit einer Linse angeordnet ist, mit der im Bereich zwischen der Linse und der Sonderoptik ein Zwischenbild ausgebildet wird, welches mittels eines im Objektarm und im Detektorarm telezentrischen Abbildungsstrahlengangs auf den Detektor abgebildet wird. Derartig ausgeführte telezentrische Optiken sind insbesondere für den Einsatz industrieller Bildverarbeitungen konzipiert und verhindern Vergößerungs-, Bild- und Winkelfehler weitgehend. Unterschiedliche Arbeitsabstände zum Objekt wirken sich dabei nicht auf den Abbildungsmaßstab aus, was insbesondere den Austausch unterschiedlicher Sonderoptiken ermöglicht.

Weiter ist das dispersionskompensierende Medium austauschbar und auch an die Sonderoptik angepasst. Hierdurch wird der Einsatz von unterschiedlichen Sonderoptiken bei geringen Änderungen am Interferometer ermöglicht. Das Interferometer ist daher universell verwendbar und kann an unterschiedlichste Messaufgaben, auch solche, die bei seiner Konzeption noch nicht bekannt sind, angepasst werden.

Ist die Länge des Referenzarmes an die Länge des Objektarms angepasst, können Sonderoptiken unterschiedlicher optischer Länge eingesetzt werden.

In einer bevorzugte Ausführung besteht das dispersionskompensierende Medium aus Glas. Durch die Variantenvielfalt der optischen Gläser ist eine Anpassung an die unterschiedlichsten Sonderoptiken möglich. Zudem ist der Austausch derartiger Glaskörper leicht möglich.

Im Objektarm wird ein Zwischenbild ausgebildet, sodass eine eindeutige Schnittstelle für auswechselbare Sonderoptiken definiert werden kann.

Im Hinblick auf den industriellen Einsatz sieht die Erfindung vor, dass im Objektarm und dem zum Detektor führenden Detektorarm ein telezentrischer Abbildungsstrahlengang ausgebildet ist. Dadurch werden Vergrößerung-, Bild- und Winkelfehler weitgehend verhindert, was den Einsatz unterschiedlicher Sonderoptiken begünstigt.

Der telezentrische Strahlengang im Objektarm wird im Referenzarm besonders gut dupliziert, indem im Referenzarm mindestens eine Linse angeordnet ist.

Eine leichte Anpassbarkeit an unterschiedliche Messaufgaben wird erreicht, indem im Objektarm eine mechanische Vorrichtung zum Wechsel der Sonderoptik vorgesehen ist.

Ist der Beleuchtungsstrahlengang am Ort des Zwischenbilds im wesentlichen parallel ausgebildet, wird erreicht, dass das Objekt mit parallelem Licht ausgeleuchtet ist. Hierdurch wird eine besonders gute Abbildungsqualität erreicht.

Wird der Durchmesser des parallelen Beleuchtungsstrahlengangs variabel einstellbar ausgelegt, ist die beleuchtete und damit in die Messung eingehende Fläche wählbar.

Eine besonders gute Anpassung an unterschiedliche optischen Eigenschaften der Sonderoptiken als auch der Objektoberfläche wird erreicht, indem die Beleuchtungsstärke und / oder die spektrale Charakteristik des Beleuchtungslichts variabel einstellbar ist.

Eine besonders einfache Anpassung der Beleuchtungsstärke ist dadurch erreicht, dass im Beleuchtungsarm eine vorzugsweise veränderbare Blende angeordnet ist.

Ist im Beleuchtungsarm ein Filter angeordnet, kann die spektrale Charakteristik des Beleuchtungslichtes besonders einfach auf die Messaufgabe abgestimmt werden.

Eine vorteilhafte Ausgestaltung für einen universellen einfachen Aufbau ergibt sich dadurch, dass eine an das das Objekt angepasste Sonderoptik in der Weise ausgebildet ist, dass mittels der Sonderoptik die optischen Weglängen der von verschiedenen Objektpunkten zurück reflektierten Strahlen bezüglich der durch die Wellenfront des Referenzarmes gegebenen Referenzfläche angeglichen werden.

Zeichnungen

Die Erfindung wird im folgenden anhand eines in den Figuren dargestellten Ausführungsbeispiels näher erläutert. Es zeigen:

Figur 1 schematisch eine Weißlichtinterferometer-Anordnung gemäß dem Stand der Technik;
Figur 2 schematisch ein interferometrisches System in erfinderischer Ausführung;
Figur 3a schematisch ein Ausführungsbeispiel für eine Messaufgabe;
Figur 3b schematisch den Strahlengang zur Messaufgabe gemäß Fig. 3a.

Beschreibung der Ausführungsbeispiele

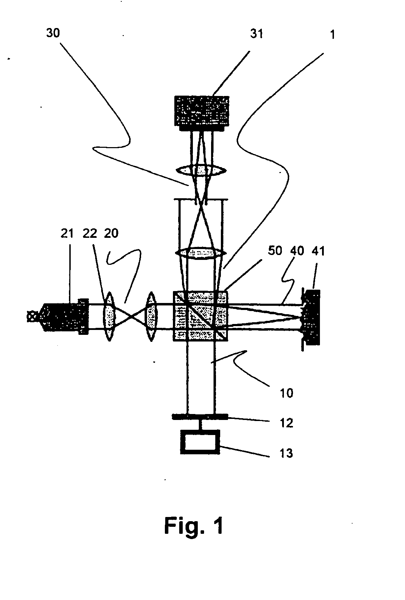

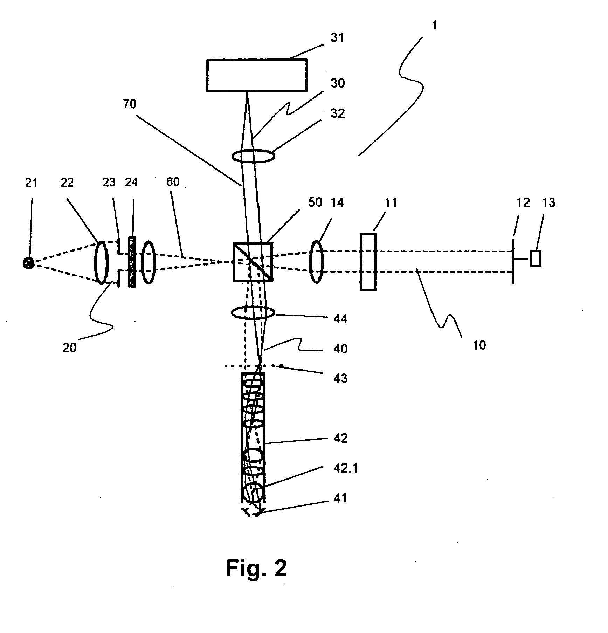

Das interferometrische System 1 der in Fig. 1 schematisch gezeigten Weißlichtinterferometer-Anordnung gemäß dem Stand der Technik umfasst einen Objektarm 40, in dem sich die zu messende Oberfläche eines Objektes 41 befindet, einem Beleuchtungsarm 20, der eine Lichtquelle 21 und eine aus einer oder mehreren Linsen aufgebauten Beleuchtungsoptik 22 aufweist. Orthogonal zum Beleuchtungsarm 20 und zum Objektarm 40 angeordnet weist das interferometrische System 1 einen Referenzarm 10 mit einem Referenzelement 12 auf, das mechanisch mit einem Verstellelement 13, üblicherweise einem Piezosystem, gekoppelt ist. Gegenüberliegend zum Referenzarm 10 befindet sich ein Detektorarm 30, der einen Detektor 31, üblicherweise einen flächenhaft messenden Detektor 31, wie beispielsweise eine CCD-Kamera, aufweist. Für die Auswertung ist eine (nicht näher gezeigte) Auswerteeinrichtung vorhanden.
Ein Strahlteiler 50 teilt dabei die verschiedenen Lichtstrahlen auf bzw. führt sie wieder zusammen, so dass die Lichtstrahlen aus dem Referenzarm 10 und die aus dem Objektazm 40 im Detektorarm 30 am Detektor 31 in der oben beschriebenen Weise interferieren können. Die Architektur eines interferometrischen Systems 1 gemäß dem Stand der Technik ist dabei weitgehend festgelegt. Änderungen im Aufbau, die aus unterschiedlichen Messaufgaben resultieren können, sind nur eingeschränkt möglich.
Dem gegenüber zeigt Fig. 2 schematisch ein interferometrisches System 1, bei dem erfindungsgemäß unterschiedliche Messaufgaben durch eine einfache Anpassung der Interferometer-Architektur bewältigt werden können.
Das interferometrische System 1 weist einen Beleuchtungsarm 20 mit einer Lichtquelle 21 und einer Beleuchtungsoptik 22, einen Objektarm 40 mit einer Sonderoptik 42 zur Vermessung von beispielsweise schwer zugänglichen Oberflächen eines Objektes 41 auf. Die Sonderoptik ist im gezeigten Ausführungsbeispiel als Endoskop ausgeführt und ermöglicht mit einer z.B. eine Kugellinse aufweisenden Rundsichtoptik 42.1 am Ende des Endoskops die Abbildung von Objekten 41, die sich unter einem großen Winkel relativ zur optischen Achse befinden.
Im Referenzarm 10 sind ein Verstellelement 13, üblicherweise ein Piezosystem, und ein daran mechanisch angekoppeltes, als ebener Referenzspiegel ausgebildetes Referenzelement 12 angeordnet, wodurch eine Tiefenabtastung (Tiefenscan) des Objekts 41 ermöglicht wird. Der Detektorarm 30 weist einen als CCD-Kamera ausgebildeten Detektor 31 auf, mit dem eine flächige, pixelweise Auswertung der durch die Interferenz erzeugten Intensitätsmodulation realisiert werden kann, welches eine eindeutige Höheninformation für jedes einzelne Pixel und damit für die Oberfläche des Objektes 41 ermöglicht. Eine weitere Möglichkeit für den Tiefenscan besteht darin, dass das interferometrische System 1 mit oder ohne Sonderoptik 42 relativ zum Objekt 41 bewegt wird.
Ein Beleuchtungsstrahlengang 60 wird ausgehend von der Lichtquelle 21 über die Beleuchtungsoptik 22 dem Strahlteiler 50 zugeführt, der das Licht teilweise in den Referenzarm 10 passieren lässt. Ein Teil des Lichts wird zur Beleuchtung des Objekts 41 in den Objektarm 40 abgelenkt. Das vom Objekt reflektierte Licht wird als Abbildungsstrahlengang 70 dem Detektorarm 30 zugeführt. Dort kann der Abbildungsstrahlengang 70 (reflektierter Referenzstrahl) mit dem vom Referenzspiegel 12 zurück reflektierten Beleuchtungsstrahlungsgang 60 interferieren.
Erfindungsgemäß ist im Referenzarm 10 ein dispersionskompensierendes Medium 11 zur Kompensation der Dispersion der Sonderoptik 42 eingebracht, welches zumindest teilweise transparent ist. In bevorzugter Ausführungsform ist das dispersionskompensierende Medium 11 austauschbar und kann an die optischen Eigenschaften der Sonderoptik 42 angepasst werden. Ebenfalls denkbar ist, dass die Länge des Referenzarmes 10 an die Sonderoptik 42 angepasst werden kann.
Das dispersionskompensierende Medium 11 besteht in bevorzugter Ausführungsform aus mindestens einem Glaskörper, der in Summe mit den anderen Komponenten des Referenzarmes 10 eine annähernd gleiche Dispersion wie die Komponenten des Objektarms 40 aufweist. In anderen Ausführungsformen sind auch zumindest teiltransparente Kunststoffkörper oder auch Küvetten mit Flüssigkeits- oder Gasfüllung denkbar.
Durch diese Anordnung wird erreicht, dass der Einsatz verschiedener Sonderoptiken 42 mit einem interferometrischen System 1 ermöglicht wird. Die notwendige Anpassung der Dispersion im Referenzarm 10 geschieht dabei auf einfache Weise durch den Austausch des dispersionskompensierenden Mediums 11 und gegebenenfalls durch eine Anpassung der Länge des Referenzarms 10.

Das in der Fig. 2 gezeigte Ausführungsbeispiel weist zudem im Objektarm 40 eine Linsenanordnung mit einer Linse 44 auf, mit der im Bereich zwischen der Linse 44 und der Sonderoptik 42 ein Zwischenbild 43 ausgebildet wird, welches mittels einem im Objektarm 40 und im Detektorarm 30 telezentrischen Abbildungsstrahlengang 70 auf den Detektor 31 abgebildet wird. Derartig ausgeführte telezentrische Optiken sind insbesondere für den Einsatz industrieller Bildverarbeitungen konzipiert und verhindern Vergrößerung-, Bild- und Winkelfehler weitgehend. Unterschiedliche Arbeitsabstände zum Objekt wirken sich dabei nicht auf den Abbildungsmaßstab aus, was insbesondere den Austausch unterschiedlicher Sonderoptiken 42 ermöglicht. Der Beleuchtungsstrahlengang 60 ist dabei im Idealfall derart ausgelegt, dass am Ort des Zwischenbildes 43 ein paralleler Strahlengang entsteht

Eine bevorzugte Ausführungsform sieht vorzugsweise zwischen dem telezentrischen Abbildungsstrahlengang 70 und der Sonderoptik 42 eine mechanische Vorrichtung zum Wechsel der Sonderoptik 42 vor, so dass die Sonderoptik 42 ähnlich wie bei einer Spiegelreflexkamera einfach ausgetauscht werden können. Vorteilhaft sind hier Bajonett- oder Gewindeverschlüsse.

Die Beleuchtungsoptik 22 im Beleuchtungsarm 20 kann eine veränderbare Blende 23 aufweisen, mit der die Heleuchtungsapertur verändert werden kann, derart, dass der Durchmesser des parallelen Beleuchtungsstrahlengangs 60 am Ort des Zwischenbildes 43 variabel einstellbar ist. Neben einer variablen Einstellung der Beleuchtungsstärke kann in ebenfalls bevorzugten Ausführungsformen im Beleuchtungsarm 20 ein Filter 24 angeordnet sein, womit die spektrale Charakteristik und damit auch die Auflösungsbedingungen geändert werden können. Besonders bevorzugt sind dabei Filteranordnungen, die ein variables Einstellen ermöglichen. Weiterhin vorteilhaft ist, wenn auch die Beleuchtungsstärke beispielsweise durch einen Graukeilfilter stufenlos veränderbar ist.

Ein Ausführungsbeispiel sieht den Einsatz eines interferometrischen Systems 1 mit den zuvor beschriebenen Merkmalen für die Inspektion von Verbrennungsmotoren, insbesondere zur Qualitätskontrolle von Ventilsitzen in Diesel-Einspritzsystemen vor.

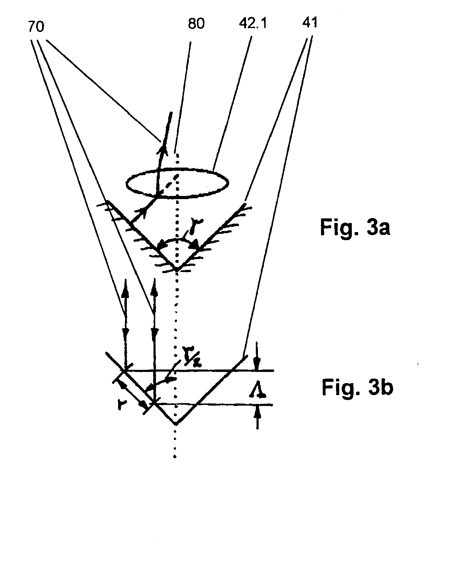

Fig. 3a zeigt schematisch eine derartige Messaufgabe. Dabei besitzt die Sonderoptik 42 eine Rundsichtoptik 42.1. Diese ermöglicht Abbildungen von Objekten, die sich unter einem großen Winkel relativ zu einer optischen Achse 80 befinden. Solche Rundsichtoptiken werden beispielsweise zur Vermessung von Ventilsitzen eingesetzt, mit denen beispielsweise der Kegelwinkel $\gamma$, die Rundheit entlang der Dichtkante und Oberflächenkenngrößen, wie Rauhigkeit erfasst werden können.

Geometrisch entspricht die Form von Ventilsitzen weitgehend der von Innenkegelflächen. Fig. 3b zeigt schematisch die Geometrie. Unter der Annahme idealer Flächen ergibt sich in der Abbildung des Innenkegels ein Intensitätsverlauf der erzeugten Interferenzstreifen von

$$I_{(r)} = \text{const. } I_o \{1 - I_m \cos ( ( 2 \pi / \lambda_m) \ 2 \cos ((\gamma / 2) \ r)\} \qquad (3)$$

Wobei r die Radialrichtung auf der Kegelfläche darstellt, $I_o$ die mittlere Intensität und $I_m$ die durch die Interferenz erzeugte Intensitätsmodulation ist. Die Bedingung für benachbarte Interferenzmaxima ist dabei

$$\Lambda = \lambda / 2 = r \cos (\gamma / 2) \qquad (4)$$

Aus Gleichung (3) lässt sich herleiten, dass die Intensität mit einer Periodenlänge $\Pi$ von

$$\Pi = \lambda_m / (2 \cos ( \gamma / 2)) \qquad (5)$$

moduliert wird.

Zur Sichtbarkeit der Interferenzstreifen benötigt man eine Auflösung, die besser als die Periodenlänge $\Pi$ ist.

Eine Vergrößerung der Periodenlänge $\Pi$ ist durch den Einsatz von an die Objektform angepassten Referenzelementen 12 möglich. Dadurch wird die Anforderung an die optische Auflösung des Systems verringert. Hierbei muss aber jeweils das Referenzelement 12 (neben den Dispersionskompensationselementen 11) an das zu vermessende Objekt 41 angepasst werden, wodurch ein gewisser Aufwand entsteht.

Eine weitere Vergrößerung der Periodenlänge $\Pi$ ist möglich durch eine an das Objekt 41 angepasste Sonderoptik 42 in der Weise, dass mittels der Sonderoptik 42 die optischen Weglängen verschiedener Objektpunkte bezüglich der durch die Wellenfront des Referenzarmes 10 gegebenen (virtuellen) Referenzfläche angeglichen werden.

Ist beispielsweise die Referenzfläche eben, so wird die Sonderoptik 42 so gestaltet, dass das Objekt 41 zumindest annähernd in eine entsprechende Ebene abgebildet wird.

Mit dieser Ausbildung des interferometrischen Systems 1 kommt es auf eine hohe Auflösung der Abbildung und der Detektionsvorrichtung nicht mehr entscheidend an, insbesondere wenn z.B. Rundheit oder Kegelwinkel des Objektes 41 vermessen werden sollen.

Mittels dieses interferometrischen Systems 1, lassen sich scharfe Abbildungen realisieren, wobei während der Messung keine Relativbewegung zwischen Sonderoptik 42 und Objekt 41 zur Nachfokussierung nötig ist. Damit sind auch Endoskopgeometrien wie z. B. gekrümmte oder sehr lange Endoskope einsetzbar. Der Tiefenscan wird mit der Bewegung eines Referenzelementes 12 im Referenzarm 10 durchgeführt.

Der Referenzarm 10 ist Teil einer interferometrischen Plattform. Die Änderung des abbildenden optischen Systems erfordert eine einmalige Veränderung der optischen Länge des Referenzarms 10, sowie die Anpassung des dispersionskompensierenden Mediums 11, was durch deren Austauschbarkeit einfach ermöglicht wird.

Zusammenfassend kann mit einem interferometrischen System 1 gemäß der Erfindung eine universale Weißlichtinterferometer-Plattform bereitgestellt werden, mit der unterschiedliche Messaufgaben durch einfachen Austausch der Sonderoptiken 42 erfüllt werden können. Damit können auch gegen Umwelteinflüsse robuste interferometrische Messaufbauten erstellt werden.

**Patentansprüche**

1. Interferometrisches System (1) mit einem, eine Lichtquelle (21) und eine Beleuchtungsoptik (22) aufweisenden Beleuchtungsarm (20) zum Bilden eines Beleuchtungsstrahlengangs (60), einem eine Sonderoptik (42) zur Vermessung eines Objektes (41) aufweisenden Objektarm (40) zum Bilden eines Abbildungsstrahlengangs (70), einem Referenzarm (10) mit einem Verstellelement (13) und einem daran angekoppelten Referenzelement (12), einem Detektorarm (30) mit einem Detektor (31) und einem Strahlteiler (50), wobei im Referenzarm (10) ein dispersionskompensierendes Medium (11) zur Kompensation der Dispersion der optischen Komponenten des Objektarms (40) eingebracht ist, das zumindest teilweise transparent ist, wobei das dispersionskompensierende Medium (11) austauschbar und auch an die Sonderoptik (42) angepasst ist,
**dadurch gekennzeichnet,**
**dass** im Objektarm (40) eine Linsenanordnung mit einer Linse (44) vorgesehen ist, mit der im Bereich zwischen der Linse (44) und der Sonderoptik (42) ein Zwischenbild (43) ausgebildet wird, welches mittels eines im Objektarm (40) und im Detektorarm (30) telezentrischen Abbildungsstrahlengangs (70) auf den Detektor (31) abgebildet wird.

2. Vorrichtung nach Anspruch 1, **dadurch gekennzeichnet, dass** die Länge des Referenzarmes (10) an die Länge des Objektarms (40) angepasst ist

3. Vorrichtung nach einem der Ansprüche 1 oder 2, **dadurch gekennzeichnet, dass** das dispersionskompensierende Medium (11) aus Glas besteht.

4. Vorrichtung nach einem der Ansprüche 1 bis 3, **dadurch gekennzeichnet, dass** im Referenzarm (10) mindestens eine Linse (14) angeordnet ist.

5. Vorrichtung nach einem der Ansprüche 1 bis 4, **dadurch gekennzeichnet, dass** im Objektarm (40) eine mechanische Vorrichtung zum Wechsel der Sonderoptik (42) vorgesehen ist.

6. Vorrichtung nach einem der Ansprüche 1 bis 5, **dadurch gekennzeichnet, dass** der Beleuchtungsstrahlengang (60) am Ort des Zwischenbilds (43) im wesentlichen parallel ausgebildet ist.

7. Vorrichtung nach Anspruch 6, **dadurch gekennzeichnet, dass** der Durchmesser des parallelen Beleuchtungsstrahlengangs (60) variabel einstellbar ist.

8. Vorrichtung nach einem der Ansprüche 1 bis 7, **dadurch gekennzeichnet, dass** die Beleuchtungsstärke und / oder die spektrale Charakteristik des Beleuchtungslichts variabel einstellbar ist.

9. Vorrichtung nach einem der Ansprüche 1 bis 8, **dadurch gekennzeichnet, dass** im Beleuchtungsarm (20) eine vorzugsweise veränderbare Blende (23) angeordnet ist.

**10.** Vorrichtung nach einem der Ansprüche 1 bis 9, **dadurch gekennzeichnet, dass** im Beleuchtungsarm (20) ein Filter (24) angeordnet ist.

**11.** Vorrichtung nach einem der Ansprüche 1 bis 10, **dadurch gekennzeichnet, dass** eine an das Objekt (41) angepasste Sonderoptik (42) in der Weise ausgebildet ist, dass mittels der Sonderoptik (42) die optischen Weglängen der von verschiedenen Objektpunkten zurück reflektierten Strahlen bezüglich der durch die Wellenfront des Referenzarmes (10) gegebenen Referenzfläche angeglichen werden.

**Claims**

**1.** Interferometric system (1) with an illumination arm (20), having a light source (21) and an illumination optics (22), for forming an illumination beam path (60), an object arm (40), having a special optics (42) for measuring an object (41), for forming an imaging beam path (70), a reference arm (10) with an adjusting element (13) and a reference element (12) coupled thereto, a detector arm (30) with a detector (31) and a beam splitter (50), a dispersion-compensating medium (11) which is intended to compensate the dispersion of the optical components of the objet arm (40) and is at least partially transparent being inserted in the reference arm (10), the dispersion-compensating medium (11) being replaceable and also being adapted to the special optics (42), **characterized in that** provided in the object arm (40) is a lens arrangement with a lens (44) with the aid of which there is formed in the region between the lens (44) and the special optics (42) an intermediate image (43) which is imaged on the detector (31) by means of a telecentric imaging beam path (70) in the object arm (40) and in the detector arm (30).

**2.** Device according to Claim 1, **characterized in that** the length of the reference arm (10) is adapted to the length of the object arm (40).

**3.** Device according to either of Claims 1 or 2, **characterized in that** the dispersion-compensating medium (11) consists of glass.

**4.** Device according to one of Claims 1 to 3, **characterized in that** at least one lens (14) is arranged in the reference arm (10).

**5.** Device according to one of Claims 1 to 4, **characterized in that** a mechanical device for changing the special optics (42) is provided in the object arm (40).

**6.** Device according to one of Claims 1 to 5, **characterized in that** the illumination beam path (60) is constructed in a substantially parallel fashion at the location of the intermediate image (43).

**7.** Device according to Claim 6, **characterized in that** the diameter of the parallel illumination beam path (60) can be set in a variable fashion.

**8.** Device according to one of Claims 1 to 7, **characterized in that** the luminance and/or the spectral characteristic of the illumination light can be set in a variable fashion.

**9.** Device according to one of Claims 1 to 8, **characterized in that** a preferably variable diaphragm (23) is arranged in the illumination arm (20).

**10.** Device according to one of Claims 1 to 9, **characterized in that** a filter (24) is arranged in the illumination arm (20).

**11.** Device according to one of Claims 1 to 10, **characterized in that** a special optics (42) adapted to the object (41) is designed in such a way that the optical path lengths of the beams retroreflected by various object points are adjusted by means of the special optics (42) as regards the reference surface given by the wave front of the reference arm (10).

**Revendications**

**1.** Système interférométrique (1) comprenant un bras d'éclairage (20) présentant une source de lumière (21) et une optique d'éclairage (22) pour former un trajet de rayon d'éclairage (60), un bras d'objet (40) présentant une optique spéciale (42) pour mesurer un objet (41) pour former un trajet de rayon de représentation (70), un bras de référence (10) comprenant un élément de positionnement (13) et un élément de référence (12) accouplé à celui-ci, un bras de détecteur (30) comprenant un détecteur (31) et un diviseur de rayon (50), un milieu de compensation de dispersion (11) qui est au moins partiellement transparent et qui est destiné à compenser la dispersion des composants optiques du bras d'objet (40) étant installé dans le bras de référence (10), le milieu de compensation de dispersion (11) étant remplaçable et étant également adapté à l'optique spéciale (42), **caractérisé en ce que** dans le bras d'objet (40) est prévu un arrangement linéaire comprenant une lentille (44) avec laquelle est formée une image intermédiaire (43) dans la zone entre la lentille (44) et l'optique spéciale (42), laquelle est représentée sur le détecteur (31) au moyen d'un trajet de rayon de représentation (70) télécentrique dans le bras d'objet (40) et dans le bras de détecteur (30).

2. Dispositif selon la revendication 1, **caractérisé en ce que** la longueur du bras de référence (10) est adaptée à la longueur du bras d'objet (40).

3. Dispositif selon la revendication 1 ou 2, **caractérisé en ce que** le milieu de compensation de dispersion (11) est en verre.

4. Dispositif selon l'une des revendications 1 à 3, **caractérisé en ce qu'**au moins une lentille (14) est disposée dans le bras de référence (10).

5. Dispositif selon l'une des revendications 1 à 4, **caractérisé en ce qu'**un dispositif mécanique de remplacement de l'optique spéciale (42) est prévu dans le bras d'objet (40).

6. Dispositif selon l'une des revendications 1 à 5, **caractérisé en ce que** le trajet de rayon d'éclairage (60) est de configuration essentiellement parallèle à l'endroit de l'image intermédiaire (43).

7. Dispositif selon la revendication 6, **caractérisé en ce que** le diamètre du trajet de rayon d'éclairage (60) est réglable et peut varier.

8. Dispositif selon l'une des revendications 1 à 7, **caractérisé en ce que** l'intensité d'éclairage et/ou la caractéristique spectrale de la lumière d'éclairage sont réglables et peuvent varier.

9. Dispositif selon l'une des revendications 1 à 8, **caractérisé en ce qu'**un obturateur (23) de préférence modifiable est disposé dans le bras d'éclairage (20).

10. Dispositif selon l'une des revendications 1 à 9, **caractérisé en ce qu'**un filtre (24) est disposé dans le bras d'éclairage (20).

11. Dispositif selon l'une des revendications 1 à 10, **caractérisé en ce qu'**une optique spéciale (42) adaptée à l'objet (41) est configurée de telle sorte que les longueurs de trajet optique des rayons réfléchis en arrière par les différents points de l'objet sont compensées au moyen de l'optique spéciale (42) en rapport avec la surface de référence donnée par le front d'onde du bras de référence (10).

**Fig. 1**

**Fig. 2**

Fig. 3a

Fig. 3b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10115524 A1
- DE 10047495 A1
- DE 10162180 A1
- US 20030011784 A1
- US 6191862 B1